# EUROPÄISCHE PATENTSCHRIFT

(11) **EP 1 967 435 B1**
(45) Veröffentlichungstag und Bekanntmachung des Hinweises auf die Patenterteilung: **28.03.2018**
(21) Anmeldenummer: 08151470.5
(22) Anmeldetag: 15.02.2008
(51) Int. Cl.: G06F 9/44, B60W 50/04, G05B 19/408

(54) **VERFAHREN ZUR ADAPTIVEN KONFIGURATIONSERKENNUNG**
METHOD FOR ADAPTIVE CONFIGURATION RECOGNITION
PROCÉDÉ DE RECONNAISSANCE DE CONFIGURATION ADAPTATIVE

(30) Priorität: 06.03.2007 DE 102007010763
(43) Veröffentlichungstag der Anmeldung: 10.09.2008
(73) Patentinhaber: ZF Friedrichshafen AG, 88046 Friedrichshafen (DE)
(72) Erfinder: Jäger, Thomas, 88074 Meckenbeuren (DE); Kaller, Mario, 88045 Friedrichshafen (DE)

(56) Entgegenhaltungen:
- EP-A2- 0 364 115
- DE-A1- 10 027 006
- DE-C1- 4 315 494
- US-A- 5 493 727

## Beschreibung

Die Erfindung betrifft ein Verfahren zur adaptiven Konfigurationserkennung nach einem Steuergerätehochlauf eines Kraftfahrzeugs gemäß dem Oberbegriff des Patentanspruchs 1.

Kraftfahrzeuge werden zunehmend mit vielen sowie komplexen elektrischen und elektronischen Geräten und Funktionen ausgestattet. An Stelle mechanischer und/oder manuell zu betätigender Stellglieder zur Bedienung der Grundfunktionen des Fahrzeugs finden sich beispielsweise in einem üblichen, modernen Kraftfahrzeug eine Vielzahl von Steuergeräten zur Überwachung und zur Beeinflussung bestimmter Komponenten oder Funktionen des Fahrzeugs. Hierfür ist es erforderlich, dass verschiedene Steuergeräte miteinander in Datenaustausch treten.

So sind an der Steuerung eines Antriebsstranges eines Kraftfahrzeugs zumeist zumindest ein Motorsteuergerät, ein Getriebesteuergerät und weitere Steuergeräte beteiligt, welche beispielsweise in fahrdynamisch kritischen Situationen die Spurführung über gezielte Bremseingriffe verbessern oder den Bremsweg mittels einer ABS-Steuerung (ABS = Antiblockiersystem) minimieren können. Zugleich steigt die Zahl zusätzlicher Systeme, wie z.B. Navigations- und Kommunikationssysteme, im Fahrzeug und deren Vernetzung untereinander stark an, welches eine Vielzahl von Kompatibilitätsproblemen aufwirft.

Aufgrund der großen Anzahl unterschiedlicher Ausstattungsvarianten eines Fahrzeugs ab Herstellwerk stellt die Konfiguration der Steuergeräte und der mit diesen verbundenen Hardwarekomponenten wie Aktuatoren, Sensoren und weitere Steuergeräte eine erhebliche Problematik bei der Konstruktion und Auslegung eines Kraftfahrzeugs dar. Zur Lösung dieser Schwierigkeiten ist es bekannt, die Software eines Fahrzeugs auf die jeweils fahrzeugindividuell vorliegende Kombination abzustimmen. Die auf das jeweilige Fahrzeug abgestimmte Programmierung der Steuergeräte erfolgt zumeist am Ende der Herstellung des Fahrzeugs und kann zumeist nur mit erheblichem Aufwand wieder verändert werden, da bei einer Umprogrammierung die Kompatibilität sämtlicher Komponenten und Steuergeräte im Fahrzeug sichergestellt werden muss.

So ist etwa aus der US 2004 0260 751 A1 ein Verfahren bekannt, bei dem im Rahmen eines Werkstattbesuchs die Konfiguration des Fahrzeugs in Bezug auf die verbaute Hardware sowie auf die aktuell abgespeicherte Software ausgelesen wird, um sicherzustellen, dass bei einer gegebenenfalls notwendigen Änderung bzw. Erweiterung der Software stets nur solche Softwaremodule installiert werden, welche für die vorliegende Konfiguration geprüft und freigegeben sind. Ein derartiges Verfahren ist in Fällen, in denen eine Umrüstung des Fahrzeugs die Ausnahme ist und allenfalls einige wenige Male innerhalb der Fahrzeuglebensdauer auftritt, vertretbar, da die entsprechenden hardwareseitigen Modifikationen zumeist ebenfalls in einer Fachwerkstatt vorgenommen werden. Nachteilig ist aber, dass die softwareseitigen Änderungen jeweils separat und Kosten erhöhend durchgeführt werden müssen.

Die US 6,747,366 B2 offenbart ein ähnliches Verfahren für ein Stromversorgungssystem eines Fahrzeugs, welches eine Anzahl intelligenter Netzwerkknoten mit jeweils einem internen Speicher für Konfigurationsdaten umfasst. Diese werden beim ersten Start des Fahrzeugs von einem Adapter ausgelesen und in einem eigenen Speicherbaustein gespeichert. Der Adapter überprüft nun in periodischen Abständen die Übereinstimmung der Konfigurationsdaten der Netzwerkknoten mit den im eigenen Speicherbaustein abgespeicherten Daten. Wenn diese Daten für einen Netzwerkknoten nicht übereinstimmen, weil der Netzwerkknoten beispielsweise ersetzt wurde und noch keine Konfigurationsdaten eingespeichert wurden, überträgt der Adapter die im eigenen Speicherbaustein gespeicherten Konfigurationsdaten für diesen Netzwerkknoten an dessen internen Speicher und konfiguriert so den neuen Netzwerkknoten, ohne dass ein Eingriff von Außen notwendig wäre. Neue Konfigurationsdaten können über ein Service-Interface in den Speicherbaustein des Adapters geschrieben werden. Beim nächsten Vergleich der hier gespeicherten Daten mit den in den Netzwerkknoten gespeicherten Daten werden letztere automatisch durch erstere überschrieben und das System so aktualisiert.

Dieses System bietet damit zwar Vorteile, wenn lediglich eine Komponente gegen eine gleiche oder jedenfalls voll kompatible Komponente gewechselt wird. Für eine schnelle und automatische Anpassung der Softwarekonfiguration in Abhängigkeit von einer vorhandenen Hardwarekonfiguration bietet sie dagegen keine Vorteile, da im Fall eines Komponentenwechsels die aktuellen Softwareteile zunächst von außen in den Speicherbaustein des Adapters geladen werden müssen. Zudem würde ein Ausfall oder Ausbau eines Knotens erst bei einer periodischen Überprüfung festgestellt.

Ein System mit externer Überprüfung von Hardware und Software ist für Fahrzeuge, welche periodisch oder gar häufig und routinemäßig umgerüstet werden, nicht praktikabel. So ist es etwa bei Arbeitsfahrzeugen gängige Praxis, unterschiedliche Komponenten an ein Fahrzeug anzuschließen. Beispielsweise im Falle eines Straßenmeisterei-Fahrzeugs soll je nach Witterung schnell und unkompliziert zwischen einem Schneepflug, einer Schneefräse und einer Walzenbürste gewechselt werden können, wobei alternativ oder gleichzeitig unterschiedliche Streugutförderer und Streugut-Verteilsysteme zum Einsatz kommen sollen. Dasselbe Arbeitsfahrzeug soll in den Sommermonaten alternativ dazu als Mähfahrzeug, als Fahrzeug zum Reinigen von Straßenbegrenzungspfählen und Leitplanken oder mit weiteren Arbeitsgeräten betrieben werden. Die Umrüstung wird hier vor Ort in der Straßenmeisterei und jedenfalls ohne Werkstattbesuch vorgenommen. Eine externe Neuprogrammierung von Steuergeräten nach jedem Umrüsten ist hierbei weder praktikabel noch vertretbar, da die Umrüstzeiten insbesondere in Hinblick auf Räumeinsätze möglichst kurz sein sollen. Ähnliches gilt beispielsweise für Einsatzfahrzeuge in der Landwirtschaft, bei der Feuerwehr und den technischen Hilfsdiensten.

Alternativ zu der vorstehend beschriebenen Möglichkeit der individuell abgestimmten Programmierung der Steuergeräte ist es bekannt, Fahrzeugsteuergeräte mit einem Speicherelement zu versehen, in welchem neben der aktuell benötigten Software-Konfiguration für die aktuelle Fahrzeugkonfiguration auch dazu alternative Konfigurationen abgespeichert sind. Aus der WO 00/77620 A2 ist ein computerisiertes Netzwerk-System für ein Fahrzeug bekannt, bei welchem die einzelnen Komponenten über ein Netzwerk verbunden sind, und welches eine einfache Rekonfiguration sowie Aufrüstung des Fahrzeugs erlaubt. Wird eine Komponente an das Netzwerk angeschlossen, welche ein spezielles "discovery-and-join" - Protokoll beherrscht, registriert sich diese automatisch bei einem Netzwerk-Server und wird in das Netzwerk integriert, woraufhin andere Komponenten den Netzwerk-Server nach neuen Funktionen durchsuchen, welche die neu angeschlossene Komponente möglicherweise bereitstellt. Die zu installierende Komponente kann hierbei einen Speicher enthalten, in dem Informationen über die ausführbaren Funktionen und über von anderen Komponenten benötigte Funktionen abgelegt sind. Die Registrierung muss dabei innerhalb bestimmter Zeiträume wiederholt werden. Andernfalls geht das System davon aus, dass die zugehörige Komponente wieder entfernt wurde und löscht die zugehörigen Informationen.

Dies hat zur Folge, dass die Wiederholung der Registrierung entweder in sehr kurzen Zeitabständen und bei dementsprechend großer Belastung des Gesamtsystems erfolgen muss, oder der Nutzer Gefahr läuft, das Fahrzeug nach der Deaktivierung einer Komponente für eine gewisse Zeit mit einer nicht aktuellen Softwarekonfiguration zu betreiben. Dies ist nicht nur unvorteilhaft sondern kann aufgrund der vielfältigen Wechselwirkungen zwischen verschiedenen Hardware- und Softwarekomponenten auch zu schwerwiegenden Fehlfunktionen oder zumindest zu unbegründeten Fehlermeldungen führen. Weiterhin ist nicht sichergestellt, dass zwischen der gewollten Deinstallation einer Komponente und einem Ausfall der Komponente unterschieden werden kann.

Die deutsche Patentschrift DE 199 26 206 C2 offenbart ein Fahrzeugelektrik-Konfigurationssystem zur automatisierten Konfigurierung fahrzeugelektrischer Anlagen, bei denen die angeschlossenen Hardwarekomponenten, die wenigstens teilweise an ein Datenbusnetzwerk angeschlossen sind, wenigstens zum Teil über implementierte Software-Komponenten zur Ausführung zugehöriger Funktionen verfügen. Weiter ist ein fahrzeugseitiger, zentraler Ist-Konfigurations-Datenspeicher zum abrufbaren Anlegen einer zum jeweiligen Fahrzeug passenden Ist-Konfiguration vorgesehen.

Im Fall eines Wechsels, eines Upgrades oder einer Neuinstallation einer Komponente kann so auf einfache Weise die bisherige Ist-Konfiguration abgefragt und gegebenenfalls aktualisiert werden. Hierfür werden alle Teilsysteme der fahrzeugelektrischen Anlage mit ihren zugehörigen Komponentenbeziehungen durch Systementwickler erfasst. Um sicherzustellen, dass die Ist-Konfiguration tatsächlich das zurzeit real vorliegende System abbildet, ist vorgesehen, dass jede Steuergerätekomponente in der Lage ist, sich selbst zu identifizieren. Da die über die Hardware-Komponenten eingelesenen Daten neben internen Details und der jeweils implementierten Software der Komponente auch Daten über anschließbare Aktuatoren und Sensoren sowie mögliche und benutzte Ressourcen, wie Leitungsverbindungen, Anschlüsse, Bus-Identifizierer, Speicherbereiche und CPU-Nutzung, enthalten, kann mit ihrer Hilfe auch die Überprüfung der Kompatibilität von Ersatzteilen mit der vorhandenen Hardware- und Software durchgeführt werden. Allerdings bedarf es für einen Komponentenwechsel oder eine Komponentenaufrüstung des Eingriffs eines Systemnutzers, der die entsprechende Komponente in der Konfiguration identifiziert.

Das System ist damit nicht in der Lage, vollautomatisch auf eine Aufrüstung, Umrüstung oder sonstige Änderung der Konfiguration zu reagieren. Es wird zwar in Anspruch 5 dieser Druckschrift ein Fahrzeugelektrik-Konfigurationsmittel beansprucht, dass ein Rekonfigurierungsmittel zur rechnergestützten automatischen Rekonfigurierung einer jeweiligen fahrzeugelektrischen Anlage bei Ersatz wenigstens einer Komponente durch wenigstens eine neue Komponente entsprechender Funktion aber anderen Typs, oder bei Hinzufügung wenigstens einer weiteren Komponente für eine neue Funktionalität oder bei Änderung wenigstens einer Komponentenbeziehung vorsieht. Dies bezieht sich jedoch auf ein menügestütztes Programm, bei dem die Ermittlung der aktualisierten Konfiguration lediglich nach manueller Eingabe von Daten vollautomatisch abläuft. Auch die Lösung der DE 199 26 206 C2 ist damit für eine möglichst schnelle und vom Fahrer oder einem Bediener unabhängige Aktualisierung der softwarebezogenen Ist-Konfiguration nicht geeignet.

Aus der WO 2004/053602 A1 ist eine Steuervorrichtung zum Betrieb eines Einsatzfahrzeuges, insbesondere eines Feuerwehrfahrzeugs, und von im Einsatzfahrzeug integrierten oder extern betreibbaren Zusatzkomponenten bekannt. Sie umfasst eine Konfiguriereinheit, die mit einer in einem Elektronikmodul angeordneten Rechenvorrichtung kommunikationsverbunden ist. In einer Speichervorrichtung sind Softwarefunktionen hinterlegt, welche den Anschlusskontakten der Ein- und Ausgangsschnittstellen des Elektronikmoduls zuordenbar sind. Der Konfiguriereinheit ist zumindest eine Eingabeeinheit und eine Anzeigeeinheit zugeordnet. Es handelt sich hierbei abermals nicht um ein vollautomatisches System, sondern lediglich um eine verbesserte Zugriffsmöglichkeit auf die Elektronikmodule der einzelnen Systeme, die auf diese Weise programmiert bzw. konfiguriert werden können.

Schließlich ist aus der DE 10 2004 055 875 A1 ein Verfahren zum anwendungsspezifischen Konfigurieren einer Software bekannt. Hierbei wird aus einer Menge von mehreren anwendungsspezifischen Softwareteilen eine Untermenge ausgewählt, welche in kompilierter Form in einem Steuergerät hinterlegt wird. Diesen ausgewählten Softwareteilen werden Variablen zugewiesen. Beispielsweise kann die Software einer Fahrdynamikregelung aus drei unterschiedlichen Teilen bestehen, denen die Variablen A, B und C zugewiesen werden. Bei einem Fahrzeug, welches wahlweise einen Vorderradantrieb oder einen Allradantrieb bereitstellen kann, ist es dann möglich, einen Softwareteil C für einen Hinterradantrieb durch setzen eines Parameters zu sperren, so dass er nicht in die Steuerung geladen werden kann. Die anderen beiden Softwareteile A und B werden in die Steuerung übertragen. Abhängig vom tatsächlichen Anwendungsfall - in diesem Beispiel davon, ob der Fahrer den Vorderradantrieb oder den Allradantrieb aktiviert - wird das jeweils passende Softwareteil A oder B kompiliert und steht der Steuerung zur Verfügung.

Dieses Verfahren ermöglicht zwar die wahlweise Nutzung einer Komponente in unterschiedlichen Softwaremodi, gibt jedoch keinen Hinweis auf eine Integration einer ausgetauschten oder nachgerüsteten Komponente in das System oder die Erkennung einer Konfiguration nach Ausbau oder Hinzufügung einer Komponente. Aus der DE 100 27 006 A1 ist ein System zur Steuerung der Betriebsabläufe bei einem Kraftfahrzeug bekannt. Sie umfasst ein Zentralspeicher, in welchem alle Programme, die zur Steuerung/Regelung der Betriebsabläufe eines Fahrzeugs notwendig sind, abgelegt sind. Über indirekte Speicherzugriffe laden die Steuergeräte beim Start des Systems die benötigten Programme in ihren Arbeitsspeicher. Die Geräte identifizieren sich zunächst nach Einschalten des Systems. Anschliessend werden mittels der Ladeprogramme über indirekte Speicherzugriffe die Programme aus dem Zentralspeicher in die Arbeitsspeicher der jeweiligen Steuergeräte geladen.

Es ist jedoch bei Fahrzeugen und insbesondere bei Nutzfahrzeugen wünschenswert, dass die Konfiguration vor allem in Bezug auf das Nachrüsten oder Entfernen von Hardwarekomponenten während der Nutzungsdauer des Fahrzeugs verändert werden kann, ohne dass hierfür zwingend ein externes System angeschlossen werden muss oder eine durch einen Bediener durchzuführende Neukonfigurierung des Systems notwendig wird.

So ist es bei Lastkraftwagen beispielsweise wünschenswert, wenn ein zunächst ohne Retarder, Nebenabtrieb oder ASR (Automatische Schlupf Regelung)-System bestelltes Fahrzeug bei Bedarf schnell und kostengünstig nachgerüstet werden kann. Dies setzt jedoch die nachträgliche Einbindung der Steuerungseinrichtung des Retarders, des Nebenabtriebs und/oder eine Veränderung der Software bzw. der Parameter für den Betrieb der z.B. Motorsteuerung voraus und bedingt daher oft eine aufwendige Neuprogrammierung anderer Steuergeräte oder sogar einen Tausch des zentralen Steuerungsgerätes.

Während es z.B. aus der DE 10 2004 055 875 A1 grundsätzlich bekannt ist, für verschiedene Ausführungsformen eines Kraftfahrzeugs eine einzige Software zu programmieren, aus der dann die zu der aktuellen Konfiguration des Fahrzeugs passenden Teile ausgewählt werden, fehlt es bislang an einem praktikablen Verfahren, um die tatsächliche hardwareseitige Konfiguration zuverlässig so zu ermitteln, dass unmittelbar nach dem Hochlauf eines Steuergerätes eines Fahrzeugs die aktuell vorliegende Konfiguration bekannt ist und die jeweils passende softwareseitige Konfiguration eingestellt wird.

Vor diesem Hintergrund liegt der Erfindung die Aufgabe zugrunde, ein Verfahren für eine adaptive Konfigurationserkennung vorzustellen, welche unmittelbar nach dem Start bzw. Hochlauf eines Steuergerätes erkennt, welche Komponenten und/oder Funktionen im oder am Fahrzeug aktuell vorhanden sind, und welche die softwareseitige Konfiguration des Fahrzeugs und/oder das Fehlermanagement automatisch anpassen kann.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass die hardwareseitige Konfiguration eines Fahrzeugs vorteilhaft zu einem möglichst späten Zeitpunkt, jedoch spätestens unmittelbar vor dessen Nutzung festgestellt werden kann. Nach Ermittlung der hardwareseitigen Konfiguration und/oder des implementierten Funktionsumfangs kann eine Steuerungseinheit bei entsprechender Auslegung des Systems mit geringem Aufwand die softwareseitige Konfigurierung des Systems vornehmen, indem beispielsweise geeignete Softwaremodule aktiviert und nicht benötigte oder sogar inkompatible Softwareteile abgeschaltet bzw. gar nicht erst geladen werden.

Demnach geht die Erfindung aus von einem Verfahren zur adaptiven Konfigurationserkennung eines Kraftfahrzeugs, welches zumindest ein zentrales Steuergerät besitzt, welches über eine Datenverbindung mit zumindest einer weiteren Komponente in Verbindung steht und welches weiter mit zumindest einem Datenspeicher in Verbindung steht, in dem Software zum Betrieb zumindest des zentralen Steuergerätes sicher gegen einen ungewollten Verlust abgespeichert ist.

Dabei kann das zentrale Steuergerät im einfachsten Fall ein Steuergerät sein, dessen Aufgabe gerade die Überprüfung der jeweiligen Konfiguration des Fahrzeugs ist. Alternativ dazu können jedoch auch andere Steuergeräte alleine oder im Verbund die Aufgabe des zentralen Steuergerätes übernehmen, oder dieses kann physisch in einem oder mehreren anderen Steuergeräten integriert sein.

Unter einer dem Begriff der weiteren Komponenten werden hier und im Folgenden sowohl weitere Steuergeräte als auch Aggregate und Komponenten sowie implementierte bzw. freigegebene Funktionen verstanden. Es ist beispielsweise möglich, dass bestimmte Funktionen zwar grundsätzlich in einem Steuergerät angelegt sind, aber z.B. erst nach einer kostenpflichtigen Freischaltung oder ab einer bestimmten Mindestausstattung des Fahrzeugs zur Verfügung stehen. In diesem Fall sollen die Funktionen erst dann als vorhanden gelten, wenn sie auch tatsächlich nutzbar, also beispielsweise freigeschaltet sind.

Ein vorzugsweise nullspannungssicherer Datenspeicher kann in das zentrale Steuergerät oder auch ein anderes Steuergerät integriert oder als eigenständige Einheit ausgebildet sein. Er umfasst zumindest die Daten, die notwendig sind, um das hier vorgestellte Verfahren zu starten und das Aufrufen von weiteren benötigten Daten zu veranlassen.

Zur Lösung der gestellten Aufgabe ist in Verbindung mit den genannten Merkmalen des Oberbegriffs des Hauptanspruchs vorgesehen, dass das zentrale Steuergerät nach einem Steuergerätehochlauf frühestmöglich identifizierende Informationen vom mit dem zentralen Steuergerät direkt oder indirekt datentechnisch verbundenen weiteren Komponenten empfängt und bei Empfang einer eine Komponente identifizierenden Information darauf schließt, dass diese weitere Komponente vorhanden ist, und anschließend für den Betrieb des Fahrzeugs mit der weiteren Komponente geeignete Teile der Software aus einem Datenspeicher in einen Betriebsdatenspeicher lädt.

In der Regel wird mehr als nur eine Komponente vorhanden sein, wobei es in diesem Zusammenhang nicht darauf ankommen soll, auf welche Weise das zentrale Steuergerät deren Daten erhält. In der Praxis ist es beispielsweise üblich, dass ein Getriebesteuergerät zugleich als Kupplungssteuergerät fungiert oder jedenfalls durch eine direkte Steuerleitung mit deren Betätigungsaktuator verbunden ist. Weiter kann die Steuerung eines Retarders - sofern vorhanden - ebenfalls durch dieses Steuergerät erfolgen. Damit ist das Getriebe- bzw. Kupplungssteuergerät in der Lage, dem zentralen Steuergerät Daten über die eigene Identität sowie über das angeschlossene Getriebe, gegebenenfalls das Kupplungssteuergerät, die Kupplung und gegebenenfalls den Retarder zu übermitteln. Alternativ oder zusätzlich dazu ist auch eine explizite Abfrage aller mit dem zentralen Steuergerät verbundenen Komponentensteuergeräte möglich. Ebenso kommt es im Rahmen der Erfindung nicht darauf an, ob das zentrale Steuergerät die identifizierende Information einer Komponente aktiv abfragt, passiv empfängt oder aus anderen Daten auf diese schließt. Wesentlich ist hierbei lediglich, dass unmittelbar nach dem Hochlauf des zentralen Steuergerätes, also nach Erreichen seiner vollen Funktionsfähigkeit, eine Abfrage erfolgt, an deren Ende im zentralen Steuergerät Informationen über die augenblickliche tatsächliche hardwareseitige und gegebenenfalls softwareseitige Konfiguration des Fahrzeugs vorliegen.

Das Hochfahren des zentralen Steuergerätes wird üblicherweise unmittelbar nach dem Einschalten der Zündung oder nach dem Start des Fahrzugs erfolgen, wodurch zu einem frühestmöglichen Zeitpunkt aktuelle Daten über die jeweils im Fahrzeug verbauten oder an dieses angeschlossenen Komponenten vorliegen. Dabei versteht es sich in Kenntnis der Erfindung von selbst, dass Informationen über bestimmte Komponenten, beispielsweise aufgrund eines länger dauernden softwarebezogenen Hochfahrvorgangs einer bestimmten Komponentensteuerung, gegebenenfalls erst nach einigen Sekunden vorliegen können.

Es ist darauf hinzuweisen, dass der Begriff der Software hier in einem weiten Sinne verstanden werden soll, und neben Programmen und Programmteilen in ausführbarer, dekompilierter oder sonstwie verschlüsselter Form selbstverständlich auch Kennlinien, Kennfelder, Protokolle, Betriebssysteme, Strukturdaten neuronaler Netze und anderes mehr umfassen kann, welches der elektronischen Datenverarbeitung zugänglich ist.

Schließlich kann der Betriebsdatenspeicher ein einziger, physikalischer Speicher oder ein über eine Mehrzahl von physikalischen Einheiten verteilter Speicher sein. Insbesondere kommt es hierbei nicht darauf an, ob die im Betriebsdatenspeicher vorhandenen Daten direkt zur Ausführung von Funktionen verwendet werden. Insbesondere bei zeitkritischen Anwendungen und bei Verwendung eines zentralen Betriebsdatenspeichers ist es vielmehr sinnvoll, wenn die jeweils ausführenden Komponenten oder Recheneinheiten lokal z.B. eine Kopie der jeweils benötigten Daten verwenden. Alternativ dazu kann der Betriebsdatenspeicher jedoch auch aus einer Vielzahl dezentral angeordneter Speichereinheiten bestehen, die erst in ihrer Gesamtheit den Betriebsdatenspeicher bilden. Dabei sind die dezentral angeordneten Speichereinheiten bevorzugt in oder bei den der jeweiligen Software zugeordneten Steuergeräten angeordnet.

Neben dem Empfang von dieser identifizierenden Information einer Komponente kann es auch von Interesse sein, explizit festzustellen, dass bestimmte Komponenten gegenwärtig nicht in das Fahrzeugsystem integriert sind. Daher ist gemäß einer ersten Weiterbildung des Verfahrens vorgesehen, dass das zentrale Steuergerät nach einem Steuergerätehochlauf identifizierende Informationen von anderen mit dem zentralen Steuergerät direkt oder indirekt datentechnisch verbundenen Komponenten empfängt und bei Ausbleiben des Empfangs einer identifizierenden Information einer Komponente darauf schließt, dass diese Komponente nicht vorhanden ist und für den Betrieb des Fahrzeugs ohne die Komponente geeignete Teile der Software aus einem Datenspeicher in einen Betriebsdatenspeicher lädt.

In beiden Fällen ist es vorteilhaft, wenn das zentrale Steuergerät die Teile der Software für den Betrieb des Fahrzeugs mit der oder den vorhandenen Komponenten aus einem zentralen Datenspeicher lädt, da so gegebenenfalls neue Datensätze zum Betrieb des Fahrzeugs in diesen zentralen Datenspeicher geladen werden können. So ist es beispielsweise möglich, im Rahmen einer ohnehin notwendigen Inspektion des Fahrzeugs jeweils die neueste Software nicht nur für die aktuell im oder am Fahrzeug vorhandenen Steuergeräte, Komponenten und Aggregate, sondern auch Softwareteile zum Betrieb sämtlicher zu diesem Zeitpunkt verfügbaren bzw. vom Hersteller zugelassenen weiteren Komponenten neu abzuspeichern. Auf diese Weise ist das Fahrzeug stets auf dem nahezu neuesten Datenstand, und ein Werkstattbesuch zum Betrieb einer neuen Komponente ist höchstens dann notwendig, wenn seit deren Freigabe keine Inspektion durchgeführt wurde und die Daten nicht anderweitig, beispielsweise direkt im nachzurüstenden Steuergerät, abgelegt sind.

Ein zentraler Datenspeicher bietet die Möglichkeit, mittels einer einfachen sowie übersichtlich strukturierten und somit gut diagnostizierbaren und gegebenenfalls änderbaren Bibliothek einen Großteil der gesamten, möglicherweise in diesem Fahrzeug zur Anwendung kommenden Software zu pflegen.

Ebenso ist es jedoch auch möglich und in der Praxis wahrscheinlicher, dass zumindest Teile derjenigen Software, die in den Betriebsdatenspeicher geladen wird, dezentral gespeichert und beispielsweise in den jeweiligen einzelnen Steuergeräten hinterlegt ist. Dies bietet den Vorteil, dass alleine durch das Anschließen einer neuen Komponente über die im Steuergerät der Komponente abgelegten Softwareteile stets die aktuelle Betriebs-Software zur Verfügung steht.

Selbstverständlich ist auch eine Kombination aus einem zentralen Datenspeicher und lokalen, einzelnen Komponenten zugeordneten Datenspeichern möglich. So ist es z.B. möglich und sinnvoll, dass der Datenspeicher als nullspannungssichere Softwareteile-Bibliothek ausgeführt ist, aus der schnell und übersichtlich strukturiert die jeweils benötigten Softwareteile in den Betriebsdatenspeicher geladen werden können. Weiter ist es sinnvoll, wenn die einzelnen Komponenten zumindest teilweise über eigene, lokale Datenspeicher für die jeweils benötigte Software verfügen. Bei einer erstmaligen Montage des Aggregats kann dann die zugehörige Software vom lokalen in den zentralen Datenspeicher übertragen werden und so eine ansonsten gegebenenfalls notwendige externe und manuelle Übertragung der Daten überflüssig machen.

Trotz aller Vorteile des vorstehend beschriebenen Verfahrens kann es aufgrund der Vielzahl der verbauten Komponenten in einem Kraftfahrzeug vorkommen, dass deren Erfassung und das Laden der zugehörigen Softwareteile zu einer Verzögerung der Betriebsbereitschaft des Fahrzeugs führen. Dies ist bei vielen Fahrzeugen, wie etwa bei Straßendienstfahrzeugen, unkritisch, da es bei diesen auf einige Sekunden nicht ankommt. Für beispielsweise Feuerwehrfahrzeuge wäre eine derartige Verzögerung jedoch kaum vertretbar.

Da selbst bei Fahrzeugen, bei denen Umrüstungen häufig vorkommen, die überwiegende Anzahl der Startvorgänge bei unveränderter Konfiguration durchgeführt werden, kann im Regelfall die Zeitspanne bis zur vollständigen Betriebsbereitschaft des Fahrzeugs verkürzt werden, wenn gemäß einer weiteren Ausgestaltung des erfindungsgemäßen Verfahrens vorgesehen ist, dass das zentrale Steuergerät in einen Konfigurations-Speicherbereich Informationen hinein schreibt, welche Komponenten als verbaut erkannt wurden, und dass das zentrale Steuergerät nach einem Steuergerätehochlauf zunächst diesen Speicherbereich einliest und von einem Vorhandensein der dort aufgeführten Komponenten ausgeht.

Dabei kann im einfachsten Fall lediglich eine Liste mit den Kennungen der zuvor erkannten Komponenten abgespeichert werden. Es ist jedoch auch möglich, zumindest die Kennungen der sich daraus ableitenden Softwareteile und gegebenenfalls deren hierarchische Beziehungen untereinander zu speichern, da so die zuletzt aktive Softwarekonfiguration ohne oder mit nur geringem Berechnungsaufwand unmittelbar rekonstruiert werden kann.

Schließlich ist es auch möglich, dass das zentrale Steuergerät in einen Konfigurations-Speicherbereich die für die erkannte Konfiguration benötigten Softwareteile in ausführbarer oder jedenfalls schnell kompilierbarer oder dekomprimierbarer Form einschreibt, nach einem Steuergerätehochlauf zunächst diesen Speicherbereich einliest und von einem Vorhandensein der zu den Softwareteilen zugeordneten Komponenten ausgeht. Die ermittelte Software-konfiguration kann damit ganz oder zumindest in wesentlichen Teilen so abgespeichert werden, dass sie ohne oder mit nur geringem Berechnungsaufwand wieder geladen werden kann und daher in kürzestmöglicher Zeit wieder zur Verfügung steht.

In einer Weiterbildung des Verfahrens gemäß der Erfindung ist vorgesehen, dass das zentrale Steuergerät in einen Konfigurations-Speicherbereich Daten darüber hinein schreibt, welche Komponenten zumindest ein Mal erkannt wurden und nach einem Steuergerätehochlauf zunächst diesen Speicherbereich einliest und von einem Vorhandensein der dort aufgeführten Komponenten ausgeht.

Der Unterschied zu dem zuvor Beschriebenen besteht darin, dass nach dieser Weiterbildung des Verfahrens eine Komponente zunächst als vorhanden gilt, wenn sie in der Vergangenheit zumindest irgendwann einmal und zumindest ein einziges Mal erkannt wurde. Auf diese Weise wächst das als vorhanden vorausgesetzte Gesamtsystem mit jeder Komponente, während bei der vorstehend beschriebenen Grundvariante des Verfahrens jeweils gespeichert wird, welche Konfiguration beim letzten Betrieb tatsächlich vorlag.

Zwar geht das zentrale Steuergerät auch dort zunächst von einem Vorhandensein aller Komponenten aus, die beim letzten Einschreiben in den Konfigurations-Speicherbereich vorhanden waren. Wenn sich jedoch herausstellt, dass einzelne Komponenten dennoch nicht vorhanden sind, wird das zentrale Steuergerät beim abermaligen Schreiben der Informationen in den Konfigurations-Speicherbereich die nunmehr als korrekt erkannte Konfiguration einspeichern. Nach der nun vorliegenden Weiterbildung wächst das im Konfigurations-Speicherbereich abgelegte System dagegen mit jeder neu angeschlossenen Komponente. Dies erleichtert es in vielen Fällen, das System möglichst stabil zu halten, da bei der Entfernung einer Komponente häufig und gerade bei hoch effektiven Softwaresystemen nicht oder nur schwer bestimmt werden kann, ob ursprünglich mit dieser Komponente implementierte Teile der Software wirklich nur für diese eine Komponente verwendet werden. Häufig werden bestimmte Softwarekomponenten vielmehr von unterschiedlichen Hardwarekomponenten beziehungsweise für deren Steuerung verwendet, weshalb eine Deinstallation sämtlicher mit einer neuen Komponente installierter Softwareteile in vielen Fällen zu einem instabilen System führen würde.

Für den Fall, dass es seit dem letzten Hochfahren des Steuergerätes zu einer Umrüstung des Fahrzeugs kam, kann jedoch zusätzlich vorgesehen sein, dass das zentrale Steuergerät bei Ausbleiben des Empfangs einer eine Komponente identifizierenden Information, die im Konfigurations-Speicherbereich als vorhanden benannt ist oder deren zugeordneter Softwareteil dort eingespeichert ist, diesen Eintrag oder den Softwareteil dort löschen oder so ändern kann, dass die Komponente als nicht vorhanden gilt, sofern die vorstehend beschriebenen Probleme in diesem Fall nicht relevant sind oder für tolerierbar gehalten werden. Dabei kann alternativ lediglich eine bestimmte Kennung oder ein bestimmter Teil der diesbezüglichen Software gelöscht und gegebenenfalls bestimmte Parameter anderer Softwareteile angepasst werden.

Alternativ oder zusätzlich dazu, und insbesondere für den Fall, dass nach den Änderungen ein instabiles Software-Gesamtsystem zu befürchten ist, kann jedoch auch ein vollständiger Neuaufbau des Systems unter Umgehung der gespeicherten Daten vorgesehen sein. Dies kann bevorzugt dadurch erreicht werden, dass die Möglichkeit vorgesehen ist, dass eine automatische Routine oder ein Bediener den Konfigurationsspeicher auf einen Anfangszustand zurücksetzt.

Da bei Aufrüstungen oder Umrüstungen des Fahrzeugs häufig aus Sicherheitsgründen die Batterie vom Bordnetz getrennt wird, ist gemäß einer weiteren Variante der Erfindung vorgesehen, dass der Konfigurations-Speicherbereich Nullspannungssicher ist. Insbesondere kann sich der Konfigurations-Speicherbereich daher in einem EEPROM befinden, da dieses besonders kostengünstig zu realisieren ist.

Schließlich lässt sich das erfindungsgemäße Verfahren besonders einfach und sicher dann durchführen, wenn das zentrale Steuergerät als Datenverbindung mit der zumindest einen weiteren Komponente über ein BusSystem verfügt, das insbesondere ein CAN-Bus sein kann.

Es sei angemerkt, dass das vorstehend beschriebene Verfahren zwar bei Fahrzeugen, welche oft oder sogar regelmäßig umgerüstet werden, ganz besonders vorteilhaft ist. Die Vorzüge dieses Verfahrens lassen sich jedoch auch bei Fahrzeugen nutzen, welche nur gelegentlich oder nur im Ausnahmefall umgerüstet werden. Selbst wenn dies in einer Werkstatt erfolgen sollte, die grundsätzlich über die Möglichkeit verfügt, nach erfolgtem Umbau eine speziell für die neue Konfiguration optimierte Software einzuspielen, ist es dennoch von Vorteil, wenn dieser gesonderte Arbeitsschritt unterbleiben kann und lediglich automatisch abläuft. Weiter ist ein Fahrzeug mit implementiertem erfindungsgemäßem Verfahren auch bei Ausfall einer Komponente in der Lage, innerhalb kürzester Zeit und ohne einen Eingriff von außen eine Softwarekonfiguration zu ermitteln, welche optimal auf die nun zur Verfügung stehenden Komponenten abgestimmt ist.

Vorteilhafterweise kann das zentrale Steuergerät aufgrund der nur kurzzeitig benötigten, relativ hohen Rechenleistung mit einem ohnehin vorhandenen Steuergerät, beispielsweise einem Motorsteuergerät kombiniert sein. Das zentrale Steuergerät kann insbesondere integraler Bestandteil eines oder mehrerer weiterer Steuergeräte sein, welche im Fahrbetrieb des Fahrzeugs hauptsächlich für andere Zwecke verwendet werden, da auf diese Weise auf das Vorsehen eines eigenen und kostenträchtigen Spezialsteuergerätes verzichtet werden kann.

Beispielsweise ist eine Integration in Steuergeräte sinnvoll, deren Funktionen unmittelbar nach dem Einschalten der Zündung verzichtbar sind, da sie im Fahrbetrieb des Fahrzeugs zumindest hauptsächlich der Steuerung, Regelung oder Überwachung fahrdynamischer Größen dienen. Beispielsweise kann aufgrund des beim Einschalten der Zündung noch stehenden Fahrzeugs auf die Berechung der Daten eines ABS-Systems, Anti-Schlupf-Regelungs-Systems, eines Einschlafwarn-Systems, eines Hinderniswarn-Systems, eines Folgeregelungs- bzw. Abstandsregelungs-Systems und ähnlicher, nur während des dynamischen Fahrbetriebes sinnvoll zu nutzender Funktionen zu Gunsten der Durchführung des Verfahrens gemäß der Erfindung verzichtet werden.

Ein weiterer Vorteil dieses Verfahrens besteht darin, dass Fehlermeldungen nur für Komponenten generiert und/oder gespeichert und/oder weiterverarbeitet werden, welche gemäß den vorstehenden Verfahrensschritten jeweils als vorhanden gelten. Da gerade bei häufigen Wechseln von Komponenten konventionell eine größere Anzahl von Fehlermeldungen generiert werden kann, erleichtert dies bei Auftreten eines tatsächlichen Fehlers die Suche der Ursache erheblich.

Von besonderer Bedeutung ist die Nutzung des Verfahrens gemäß der Erfindung bei der fahrzeuginternen, komponentenbezogenen Verwaltung derer Software sowie der Steuerung und Regelung von Komponenten von Fahrzeug-Antriebssträngen und von Komponenten des Infotainments eines Fahrzeugs, also der Versorgung des Fahrers mit Audio-, Video und Navigationsinformationen. So ist vorgesehen, dass mit dem Verfahren gemäß der Erfindung eine wechselnde Komponenten-Ausstattung und/oder Funktions-Ausstattung eines Fahrzeug-Antriebsstranges oder eines Infotainment-Systems überwacht und diesbezügliche Steuerungs- und/oder Regelungs-Softwaremodule genutzt und/oder angepasst oder deaktiviert werden.

Die Erfindung lässt sich anhand eines Ausführungsbeispiels weiter erläutern. Dazu sind der Beschreibung zwei Ablaufpläne beigefügt.

Diese zeigen in stark vereinfachter Form in
- Fig. 1: den Ablauf des Verfahrens ohne Einspeicherung der erkannten Konfiguration in einen Konfigurations-Speicherbereich und in
- Fig. 2: den Ablauf des Verfahrens mit Einspeicherung der erkannten Konfiguration in einen Konfigurations-Speicherbereich.

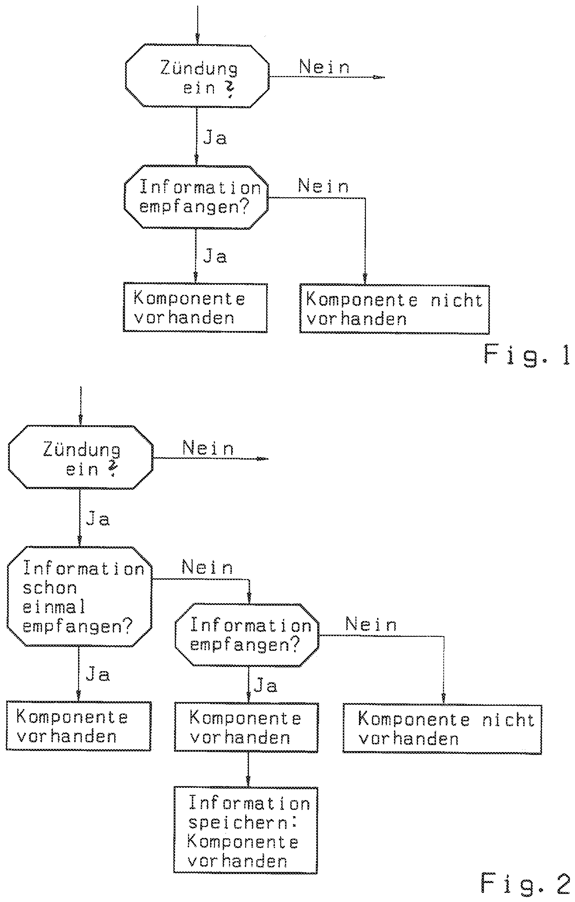

Mit Bezug auf Fig. 1 sei von einem Lastkraftwagen ausgegangen, welcher mit einem erfindungsgemäßen Verfahren ohne Einspeicherung der erkannten Konfiguration in einen Konfigurations-Speicherbereich ausgestattet ist.

Nach Einschalten der Fahrzeug-Zündung (Ablaufschritt: Zündung ein) und Hochlauf des Steuergerätes erfolgt eine Erkennung der Fahrzeugkonfiguration dahingehend, dass die Eingangsinformationen der verschiedenen, untereinander und mit dem zentralen Steuergerät über einen CAN-Bus verbundenen Komponenten ausgewertet werden. Können die identifizierenden Informationen bestimmter Komponenten erfolgreich eingelesen werden (Ablaufschritt: Information empfangen), so wird festgestellt, dass diese Komponenten auch in dem Fahrzeugverbund verbaut bzw. zur Benutzung freigeschaltet sind (Ablaufschritt: Komponente vorhanden). Dementsprechend wird davon ausgegangen, dass Komponenten nicht in dem Fahrzeugverbund verbaut oder freigeschaltet sind, wenn die entsprechenden Informationen, beispielsweise als CAN-Bus-Botschaften bzw. CAN-Bus-Signale, vom zentralen Steuergerät nicht gelesen werden konnten (Ablaufschritt: Komponente nicht vorhanden).

Es wird hier davon ausgegangen, dass der Hochlauf des zentralen Steuergerätes unmittelbar bzw. schnellstmöglich nach dem Einschalten der Zündung des Fahrzeugs erfolgt. In diesem Fall erfolgt die adaptive Konfigurationserkennung nach dem Einschalten der Zündung, indem das zentrale Steuergerät davon ausgeht, dass eine Komponente bzw. Funktion nicht im Fahrzeug vorhanden ist, bis diesbezüglich relevante Informationen erfolgreich gelesen wurden.

Der Begriff der relevanten Informationen soll dabei ausdrücken, dass es selbstverständlich nicht genügt, wenn eine Komponente, beispielsweise ein Steuergerät, eine Kennung übermittelt, aus der gegebenenfalls gleichzeitig hervorgeht, dass diese Komponente defekt oder nicht betriebsbereit ist. Eine relevante, identifizierende Information, die zu einer Integration oder Freischaltung der entsprechenden Software bzw. Parameter führt, soll vielmehr nach Möglichkeit die Betriebsbereitschaft der Komponente oder deren technische Funktion nach erfolgtem Abschluss des Verfahrens mit einer ausreichenden Sicherheit erwarten lassen.

Nach Abschluss der Ermittlung der einzubindenden Komponenten und gegebenenfalls Funktionen kann dann leicht z.B. durch das zentrale Steuergerät oder auch dezentral verteilt eine Softwarekonfiguration gewählt werden, welche alle detektierten Komponenten bzw. Funktionen umfasst und dementsprechend optimal auf die derzeitige Konfiguration des Fahrzeugs abgestimmt ist. Da dieser Prozess jedoch unter Umständen einige Sekunden in Anspruch nehmen kann und das Fahrzeug in dieser Zeit nicht oder nur eingeschränkt betriebsbereit ist, kann gemäß einer Weiterbildung gemäß Fig. 2 vorgesehen sein, dass die adaptive Konfigurationserkennung mit einem Konfigurationsspeicher bzw. mit einem Konfigurations-Speicherbereich ausgestattet ist.

In diesem Fall geht das zentrale Steuergerät gemäß dem Ablaufplan der Fig. 2 nach Einschalten der Zündung (Ablaufschritt: Zündung ein) solange davon aus, dass eine Komponente bzw. Funktion nicht im Fahrzeug vorhanden ist, bis relevante Informationen zumindest einmal gelesen wurden (Ablaufschritt: Information schon einmal empfangen + Ablaufschritt: Komponente vorhanden). Dabei ist die zuletzt verwendete Konfiguration im Konfigurations-Speicherbereich abgelegt und umfasst alle Informationen, die bereits vor dem aktuellen Programmlauf zumindest ein Mal empfangen und im Konfigurations-Speicherbereich abgelegt wurden.

Sofern die relevanten, die zusätzliche Komponente identifizierenden Informationen bisher nicht empfangen und deren Empfang noch nicht abgespeichert wurde, folgt das Verfahren gemäß Fig. 2 den oben beschriebenen Verfahrenschritten des Ablaufplans der Fig. 1 (rechte Seite des Ablaufplans der Fig. 2), wobei ein in diesem Zyklus erfolgtes erstmaliges Empfangen der relevanten Informationen abgespeichert wird (Ablaufschritt: Informationen speichern: Komponente vorhanden) oder die Feststellung, dass diese Komponente nicht vorhanden ist (Ablaufschritt: Komponente nicht vorhanden).

Die genannte Speicherung im Konfigurations-Speicherbereich kann im einfachsten Fall in Form einer Liste der zuvor erkannten Komponenten erfolgen. Auch können beim ersten erfolgreichen Lesen von relevanten, die jeweilige Komponente identifizierenden Informationen einer Komponente oder Funktion diese Daten direkt im Konfigurations-Speicherbereich abgelegt werden, womit sie unmittelbar in der ursprünglichen Form zur Verfügung stehen.

In vielen Fällen ist es jedoch sinnvoll, wenn alternativ dazu oder zusätzlich auch die entsprechenden Teile der Software und gegebenenfalls deren Verknüpfung untereinander im Konfigurations-Speicherbereich abgespeichert werden, da so der entsprechende Rechenaufwand für eine erneute, aber identische Zusammenstellung der Software zumindest verringert werden kann. Weiter ist es gerade bei Fahrzeugen, welche nur selten umgerüstet werden, auch möglich und sinnvoll, alternativ oder zusätzlich das zuletzt erstellte und vollständige Softwaresystem zu speichern, wodurch dieses in kürzestmöglicher Zeit zur Verfügung steht und der Zeitraum bis zur vollständigen Betriebsbereitschaft des Fahrzeugs abermals verkürzt werden kann.

Dieser Programmablauf kann auch dazu verwendet werden, dass eine Fehlererkennung für diejenigen Komponenten bzw. Funktionen ausgesetzt wird, bis erfolgreich bestimmt werden kann, welche Komponenten bzw. Funktionen im Fahrzeugverbund vorhanden bzw. aktiviert sind. Damit wird sichergestellt, dass keine Fehlermeldungen über nicht vorhandene Komponenten bzw. Funktionen an den Fahrzeugverbund gemeldet bzw. von diesem generiert werden.

Weiter ist es bei Nutzung eines Konfigurations-Speicherbereichs sinnvoll, dass z.B. im Servicefall ein Rücksetzen bzw. Löschen der gespeicherten Konfiguration möglich ist, um beispielsweise bei nachträglichem Ausbau einer Komponente oder bei Deaktivierung einer Funktion diese auch im Konfigurations-Speicherbereich zu deaktivieren. Damit ist auch sichergestellt, dass keine die ausgebaute Komponente oder deaktivierte Funktion betreffenden Fehlermeldungen auflaufen.

Das genannte Rücksetzen kann beispielsweise mittels einer Diagnoseroutine automatisch oder auch manuell ausgelöst werden. Es ist jedoch auch möglich, an Stelle der Rücksetzung bzw. des Löschens des Konfigurations-Speicherbereichs nur die entsprechende Komponente oder Funktion aus diesem zu entfernen. Dies erscheint jedoch nur in Ausnahmefällen sinnvoll, da auf diese Weise durch wiederholtes Hinzufügen und Löschen verschiedener Komponenten und Funktionen ein zunehmend instabiles Software-Gesamtsystem entstehen könnte.

Die Nutzung des Konfigurations-Speicherbereichs bzw. des Verfahrensablaufs gemäß Fig. 2 soll noch an einem weiteren Beispiel verdeutlicht werden:

Es sei von einem Fahrzeug ausgegangen, das zum Zeitpunkt seiner Herstellung am Ende der Fertigungsstrecke keinen Nebenabtrieb verbaut hat. Die - durch eine entsprechende CAN-Botschaft repräsentierte - Information "Nebenabtrieb verbaut" kann dementsprechend nach dem Einschalten der Zündung nicht gelesen werden, da sie weder im Konfigurations-Speicherbereich abgelegt ist, noch aktiv von einem Nebenantrieb übermittelt werden kann. Später wird nachträglich bei einem Aufbauhersteller ein Nebenabtrieb mit einem entsprechenden Steuergerät installiert. Nach dem ersten Einschalten der Zündung nach dieser Konfigurationsänderung steht damit eine durch eine CAN-Botschaft repräsentierte, relevante Information "Nebenabtrieb vorhanden" zur Verfügung, wird sodann vom zentralen Steuergerät eingelesen und schließlich im Konfigurations-Speicherbereich abgespeichert.

Bei jedem nachfolgenden Programmablauf, also sehr bald nach jedem Einschalten der Zündung, steht ab dann die Information "Nebenabtrieb vorhanden" aus dem Konfigurations-Speicherbereich zur Verfügung, so dass auf eine gegebenenfalls länger dauernde Abfrage des Steuergerätes des Nebenabtriebes verzichtet werden kann.

Sollte der Nebenabtrieb wieder deinstalliert werden, so genügt es, wenn die Werkstatt, der Fahrer oder auch eine automatische Funktion den Konfigurations-Speicherbereich zurücksetzt. Auf diese Weise ist sichergestellt, dass z.B. keine Fehlermeldungen bezüglich eines gar nicht mehr vorhandenen Nebenabtriebs generiert werden und eine automatische, für die neue Hardware-Konfiguration optimale Konfiguration der Software leicht möglich ist.

## Patentansprüche

1. Verfahren zur adaptiven Konfigurationserkennung eines Kraftfahrzeugs, welches zumindest ein zentrales Steuergerät besitzt, welches über eine Datenverbindung mit zumindest einer weiteren Komponente in Verbindung steht und welches weiter mit zumindest einem Datenspeicher in Verbindung steht, in dem Software zum Betrieb zumindest des zentralen Steuergerätes sicher abgespeichert ist, wobei das zentrale Steuergerät nach einem Steuergerätehochlauf identifizierende Informationen von mit dem zentralen Steuergerät direkt oder indirekt datentechnisch verbundenen weiteren Komponenten empfängt und bei Empfang einer eine Komponente identifizierenden Information darauf schließt, dass diese weitere Komponente vorhanden ist, sowie für den Betrieb des Fahrzeugs mit der weiteren Komponente geeignete Teile der Software aus einem Datenspeicher in einen Betriebsdatenspeicher lädt, **dadurch gekennzeichnet, dass** das zentrale Steuergerät in einen Konfigurations-Speicherbereich Informationen darüber schreibt, welche Komponenten erkannt wurden, und nach einem Steuergerätehochlauf die Konfiguration aus dem Konfigurations-Speicherbereich einliest, die beim letzten Betrieb tatsächlich vorlag und von einem Vorhandensein der dort aufgeführten Komponenten ausgeht, wobei das zentrale Steuergerät bei Ausbleiben des Empfangs einer identifizierenden Information eines Steuergerätes oder einer Komponente, welche im Konfigurations-Speicherbereich als vorhanden benannt ist oder deren zugeordneter Softwareteil dort eingespeichert ist, diesen Eintrag oder den Softwareteil löscht oder so ändert, dass die Komponente als nicht vorhanden benannt ist.

2. Verfahren nach Anspruch 1, **dadurch gekennzeichnet, dass** das zentrale Steuergerät nach einem Steuergerätehochlauf identifizierende Informationen von anderen mit dem zentralen Steuergerät direkt oder indirekt datentechnisch verbundenen weiteren Komponenten empfängt und bei Ausbleiben des Empfangs einer identifizierenden Information einer Komponente darauf schließt, dass diese weitere Komponente nicht vorhanden ist, sowie für den Betrieb des Fahrzeugs ohne diese weitere Komponente geeignete Teile der Software aus einem Datenspeicher in einen Betriebsdatenspeicher lädt.

3. Verfahren nach Anspruch 1 oder 2, **dadurch gekennzeichnet, dass** das zentrale Steuergerät die Teile der Software für den Betrieb des Fahrzeugs mit der oder den vorhandenen Komponenten aus einem zentralen Datenspeicher lädt.

4. Verfahren nach Anspruch 1, **dadurch gekennzeichnet, dass** das zentrale Steuergerät in einen Konfigurations-Speicherbereich Informationen darüber schreibt, welche Komponenten zumindest ein Mal erkannt wurden, und nach einem Steuergerätehochlauf zunächst diesen Speicherbereich liest und von einem Vorhandensein der dort aufgeführten Komponenten ausgeht.

5. Verfahren nach zumindest einem der Ansprüche 1 bis 4, **dadurch gekennzeichnet, dass** die Möglichkeit vorgesehen ist, dass eine automatische Routine oder ein Bediener durch einen manuellen Eingriff den Konfigurationsspeicher zurücksetzt bzw. löscht.

6. Verfahren nach zumindest einem der Ansprüche 1, 4 oder 5, **dadurch gekennzeichnet, dass** der Konfigurations-Speicherbereich nullspannungssicher betrieben wird.

7. Verfahren nach Anspruch 6, **dadurch gekennzeichnet, dass** der Konfigurations-Speicherbereich in einem EEPROM abspeichernd betrieben wird.

8. Verfahren nach zumindest einem der Ansprüche 1 bis 7, **dadurch gekennzeichnet, dass** das zentrale Steuergerät zur Datenverbindung mit zumindest einer weiteren Komponente oder einem der Komponente zugeordneten Komponentensteuergerät eine Daten-Bus-Verbindung nutzt.

9. Verfahren nach Anspruch 8, **dadurch gekennzeichnet, dass** die Daten-Bus-Verbindung als ein CAN-Bus betrieben wird.

10. Verfahren nach zumindest einem der Ansprüche 1 bis 9, dadurch **g ekennzeichnet,** dass das zentrale Steuergerät als integraler Bestandteil eines oder mehrerer weiterer Steuergeräte betrieben wird, welche im Fahrbetrieb des Fahrzeugs hauptsächlich für andere Zwecke verwendet werden.

11. Verfahren nach Anspruch 10, **dadurch gekennzeichnet, dass** das zumindest eine weitere Steuergerät ein solches ist, welches im Fahrbetrieb des Fahrzeugs zumindest hauptsächlich zur Steuerung, Regelung oder Überwachung fahrdynamischer Größen verwendet wird.

12. Verfahren nach zumindest einem der Ansprüche 1 bis 11, **dadurch gekennzeichnet, dass** Fehlermeldungen nur für Komponenten generiert und/oder gespeichert und/oder weiterverarbeitet werden, welche gemäß den vorstehenden Verfahrensschritten jeweils als vorhanden gelten.

13. Verfahren nach zumindest einem der Ansprüche 1 bis 12, **dadurch gekennzeichnet, dass** mit diesem eine wechselnde Komponenten-Ausstattung und/oder Funktions-Ausstattung eines Fahrzeug-Antriebsstranges oder eines Infotainment-Systems überwacht und diesbezügliche Steuerungs- und/oder Regelungs-Softwaremodule genutzt und/oder angepasst oder deaktiviert werden.

## Claims

1. Method for adaptively detecting the configuration of a motor vehicle having at least one central control device which is connected to at least one further component via a data connection and is also connected to at least one data memory which securely stores software for operating at least the central control device, wherein the central control device, after a control device start-up, receives identifying information from further components directly or indirectly connected to the central control device using data technology and, upon receiving an item of information identifying a component, concludes that this further component is present and loads parts of the software which are suitable for operating the vehicle with the further component from a data memory into an operating data memory, **characterized in that** the central control device writes information relating to which components have been detected to a configuration memory area and, after a control device start-up, reads **in that** configuration from the configuration memory area which was actually present during the last operation and assumes the presence of the components listed there, wherein, if an item of identifying information relating to a control device or a component which is mentioned as present in the configuration memory area or whose associated software part is stored there is not received, the central control device deletes this entry or the software part or changes it in such a manner that the component is mentioned as not present.

2. Method according to Claim 1, **characterized in that**, after a control device start-up, the central control device receives identifying information from other further components directly or indirectly connected to the central control device using data technology and, if an item of identifying information relating to a component is not received, concludes that this further component is not present and loads parts of the software which are suitable for operating the vehicle without this further component from a data memory into an operating data memory.

3. Method according to Claim 1 or 2, **characterized in that** the central control device loads the parts of the software for operating the vehicle with the component(s) present from a central data memory.

4. Method according to Claim 1, **characterized in that** the central control device writes information relating to which components have been detected at least once to a configuration memory area and, after a control device start-up, first of all reads this memory area and assumes the presence of the components listed there.

5. Method according to at least one of Claims 1 to 4, **characterized in that** it is possible for an automatic routine or an operator to reset or delete the configuration memory by means of a manual intervention.

6. Method according to at least one of Claims 1, 4 and 5, **characterized in that** the configuration memory area is operated in a non-volatile manner.

7. Method according to Claim 6, **characterized in that** the configuration memory area is operated in a storing manner in an EEPROM.

8. Method according to at least one of Claims 1 to 7, **characterized in that** the central control device uses a data bus connection for the data connection to at least one further component or to a component control device assigned to the component.

9. Method according to Claim 8, **characterized in that** the data bus connection is operated as a CAN bus.

10. Method according to at least one of Claims 1 to 9, **characterized in that** the central control device is operated as an integral part of one or more further control devices which are mainly used for other purposes during driving of the vehicle.

11. Method according to Claim 10, **characterized in that** the at least one further control device is a control device which is at least mainly used to control, regulate or monitor driving dynamics variables during driving of the vehicle.

12. Method according to at least one of Claims 1 to 11, **characterized in that** error messages are generated and/or stored and/or processed further only for components which are each considered to be present according to the preceding method steps.

13. Method according to at least one of Claims 1 to 12, **characterized in that** a changing component configuration and/or functional configuration of a vehicle drive train or of an infotainment system is monitored and relevant control and/or regulating software modules are used and/or adapted or deactivated using said method.

## Revendications

1. Procédé pour la reconnaissance adaptative de configuration d'un véhicule automobile comportant au moins un appareil de commande central qui est relié par l'intermédiaire d'une liaison de données à au moins un autre composant et qui est en outre relié à au moins une mémoire de données dans laquelle est stocké de manière sécurisée un logiciel destiné à la mise en fonctionnement d'au moins l'appareil de commande central, dans lequel l'appareil de commande central reçoit, après le démarrage de l'appareil de commande, des informations d'identification d'autres composants directement ou indirectement reliés par transmission de données à l'appareil de commande central et conclut, lors de la réception d'une information identifiant un composant, que ledit composant supplémentaire est présent, et charge, à partir d'une mémoire de données de fonctionnement, des parties du logiciel appropriées pour la mise en fonctionnement du véhicule avec l'autre composant, **caractérisé en ce que** l'appareil de commande central écrit dans une zone de mémoire de configuration des informations indiquant quels composants ont été détectés et **en ce qu'**il lit, après un démarrage de l'appareil de commande, à partir de la zone de mémoire de configuration, la configuration qui était effectivement présente lors du dernier fonctionnement et considère que les composants figurant dans cette configuration sont présents, dans lequel l'appareil de commande central, lorsqu'il ne reçoit pas d'information d'identification d'un appareil de commande ou d'un composant qui est désigné comme étant présent dans la mémoire de configuration ou dont la partie de logiciel associée y est stockée, supprime cette entrée ou la partie de logiciel ou la modifie de telle sorte que le composant est désigné comme n'étant pas présent.

2. Procédé selon la revendication 1, **caractérisé en ce que** l'appareil de commande central reçoit des informations d'identification d'autres composants qui sont directement ou indirectement reliés à l'appareil de commande central par transmission de données après un démarrage de l'appareil de commande et conclut, lorsqu'il ne reçoit pas d'information d'identification d'un composant, que ledit autre composant n'est pas présent et charge à partir d'une mémoire de données de fonctionnement des parties du logiciel appropriées pour le fonctionnement du véhicule sans ledit autre composant.

3. Procédé selon la revendication 1 ou 2, **caractérisé en ce que** l'appareil de commande central charge les parties du logiciel à partir d'une mémoire de données centrale pour le fonctionnement du véhicule avec le ou les composants présent(s).

4. Procédé selon la revendication 1, **caractérisé en ce que** l'appareil de commande central écrit dans une zone de mémoire de configuration des informations indiquant quels composants ont été détectés au moins une fois et lit ladite zone de mémoire après un démarrage de l'appareil de commande et considère que les composants qui y figurent sont présents.

5. Procédé selon au moins l'une des revendications 1 à 4, **caractérisé en ce qu'**il est prévu la possibilité qu'une routine automatique ou qu'un opérateur réinitialise ou efface la mémoire de configuration au moyen d'une intervention manuelle.

6. Procédé selon au moins l'une des revendications 1, 4 ou 5, **caractérisé en ce que** la zone de mémoire de configuration est mise en fonctionnement sans risque de tension nulle.

7. Procédé selon la revendication 6, **caractérisé en ce que** la zone de mémoire de configuration est mise en fonctionnement sous une forme stockée dans une EEPROM.

8. Procédé selon au moins une des revendications 1 à 7, **caractérisé en ce que** l'appareil de commande central utilise une liaison par bus de données pour la liaison de données à au moins un autre composant ou à un appareil de commande de composants associé au composant.

9. Procédé selon la revendication 8, **caractérisé en ce que** la liaison par bus de données est mise en fonctionnement sous la forme d'un bus CAN.

10. Procédé selon au moins l'une des revendications 1 à 9, **caractérisé en ce que** l'appareil de commande central est mis en fonctionnement sous la forme d'une partie intégrante d'un ou plusieurs autres appareils de commande qui sont principalement utilisés à d'autres fins dans le fonctionnement de conduite du véhicule.

11. Procédé selon la revendication 10, **caractérisé en ce que** l'au moins un autre appareil de commande est un appareil du type qui est utilisé dans le fonctionnement de conduite du véhicule au moins principalement pour commander, réguler ou surveiller des paramètres dynamiques de conduite.

12. Procédé selon au moins l'une des revendications 1 à 11, **caractérisé en ce que** des messages d'erreur ne sont générés et/ou mémorisés et/ou post-traités que pour des composants qui sont considérés comme étant respectivement présents selon les étapes de procédé mentionnées précédemment.

13. Procédé selon au moins l'une des revendications 1 à 12, **caractérisé en ce que** ce dernier permet de surveiller une configuration changeante de composants et/ou une configuration fonctionnelle d'un groupe motopropulseur de véhicule ou d'un système d'info-divertissement et **en ce que** des modules logiciels de commande et/ou de régulation sont à cet effet utilisés et/ou adaptés ou désactivés.
